# EUROPEAN PATENT APPLICATION

(11) **EP 4 832 348 A1**
(43) Date of publication of application: **28.10.2026**
(21) Application number: 26169337.8
(22) Date of filing: 30.03.2026
(51) Int. Cl.: H03K 3/027, G01R 31/3185, G06F 30/33, G06F 30/327, G06F 30/398, G06F 30/3312, G06F 30/3315, H03K 3/012, H03K 3/037, H03K 17/60, H03K 17/62, G06F 119/12

(54) **NON-SCANNABLE FLIP-FLOP FOR A SCANNABLE DIGITAL CIRCUIT**

(30) Priority: 22.04.2025 US 202519186319
(71) Applicant: Google LLC, Mountain View, CA 94043 (US)
(72) Inventor: Arimilli, Rajesh, 122001 Gurgaon (IN); Saifee, Shabbir, 122001 Gurgaon (IN)
(74) Representative: Maikowski & Ninnemann Patentanwälte Partnerschaft mbB

(57) **Abstract**

Implementations described herein relate to non-scannable flip-flops used within scannable digital circuits. For example, an illustrative method includes determining that a first propagation delay of a first stage of combinatorial logic is greater than a delay threshold, the first stage preceding a first scannable flip-flop within a scannable digital circuit design, and, based on that determination, modifying the scannable digital circuit design to integrate a multiplexing function controlled by a scan enable signal into the first stage and to convert the first scannable flip-flop into a non-scannable flip-flop. The method further includes determining that a second propagation delay of a second stage of combinatorial logic is less than the delay threshold, the second stage preceding a second scannable flip-flop within the scannable digital circuit design, and, based on that determination, retaining the second scannable flip-flop in the circuit design. Corresponding methods, circuits, media, and other implementations are also disclosed.

## Description

### BACKGROUND

Microscopic digital circuitry such as may be found within a processor (e.g., a central processing unit (CPU), a graphics processing unit (GPU), a microprocessor, etc.) or another integrated circuit (e.g., an application-specific integrated circuit (ASIC), a field-programmable gate array (FPGA), etc.) may be extremely small and complex, such that it would be virtually impossible to verify correctness and reliability of the circuitry without special provision being made. Accordingly, scannable digital circuits refer to those digital circuits that have been designed with specific features to enhance their testability. For example, scan chains may be integrated into the circuitry to improve the controllability and observability of the circuit's internal state and thereby facilitate efficient and effective testing of the complex digital circuitry.

### SUMMARY

In order to test complex digital circuitry (e.g., CPUs, GPUs, other processors and/or complex integrated circuits, etc.) for proper functionality and reliability, scan chains and/or other specific features may be integrated into the circuitry to enable and/or facilitate the testing. For example, registers and other synchronous storage components within the design may be implemented by scannable flip-flops that may be configured to operate in either a normal mode (for regular functions of the circuitry) or a scan mode (for testing of the circuitry). While such scannable flip-flops provide important benefits for the circuit (e.g., allowing the circuit to be robustly tested), these flip-flops can also present significant costs, particularly when they are found on pathways where timing is relatively critical (e.g., pathways where it takes nearly the entirety of a clock cycle for a digital signal to propagate from one flip-flop, through a series of combinatorial logic, to the next flip-flop). Accordingly, methods and apparatuses described herein relate to how certain scannable flip-flops within a digital circuit design may be converted to non-scannable flip-flops that do not present the same timing and/or power consumption challenges as the scannable ones, even while preserving all the benefits of a fully-scannable digital circuit.

In some aspects, the techniques described herein relate to a scannable digital circuit including: a first stage of combinatorial logic configured to perform, at an output of the first stage, a multiplexing function controlled by a scan enable signal; a first flip-flop configured to receive the output of the first stage after the multiplexing function is performed, the first flip-flop being a non-scannable flip-flop; a second stage of combinatorial logic; and a second flip-flop configured to receive an output of the second stage, the second flip-flop being a scannable flip-flop that is configured to perform the multiplexing function controlled by the scan enable signal.

In some aspects, the techniques described herein relate to a method including: determining that a first propagation delay of a first stage of combinatorial logic is greater than a delay threshold, the first stage preceding a first scannable flip-flop within a scannable digital circuit design; modifying, based on the determining that the first propagation delay is greater than the delay threshold, the scannable digital circuit design to: integrate a multiplexing function controlled by a scan enable signal into the first stage at an output of the first stage, and convert the first scannable flip-flop into a non-scannable flip-flop; determining that a second propagation delay of a second stage of combinatorial logic is less than the delay threshold, the second stage preceding a second scannable flip-flop within the scannable digital circuit design; and retaining, based on the determining that the second propagation delay is less than the delay threshold, the second scannable flip-flop in the scannable digital circuit design.

In some aspects, the techniques described herein relate to a non-transitory computer-readable medium storing instructions that, when executed, cause a processor of a computing device to perform a process including: determining that a first propagation delay of a first stage of combinatorial logic is greater than a delay threshold, the first stage preceding a first scannable flip-flop within a scannable digital circuit design; modifying, based on the determining that the first propagation delay is greater than the delay threshold, the scannable digital circuit design to: integrate a multiplexing function controlled by a scan enable signal into the first stage at an output of the first stage, and convert the first scannable flip-flop into a non-scannable flip-flop; determining that a second propagation delay of a second stage of combinatorial logic is less than the delay threshold, the second stage preceding a second scannable flip-flop within the scannable digital circuit design; and retaining, based on the determining that the second propagation delay is less than the delay threshold, the second scannable flip-flop in the scannable digital circuit design.

Other implementations may perform similar functions as described above and/or may use other types of hardware to perform the functions. Certain implementations may involve systems, devices, circuits, media, and/or combinations of these, that employ scannable digital circuits such as described herein and/or techniques for designing the same.

The details of these and other implementations are set forth in the accompanying drawings and the description below. Other features will also be made apparent from the following description, drawings, and claims.

### BRIEF DESCRIPTION OF THE DRAWINGS

FIG. 1 shows certain aspects of how an illustrative scannable digital circuit may be modified to replace a scannable flip-flop with a non-scannable flip-flop in accordance with principles described herein.
FIGS. 2A-2C illustrate functional aspects of a scannable flip-flop and several alternative ways that desired behaviors of a scannable flip-flop could be produced within a scannable digital circuit in accordance with principles described herein.
FIG. 3 shows an illustrative method for implementing a non-scannable flip-flop within a scannable digital circuit in accordance with principles described herein.
FIG. 4 shows a first example modification of a scannable digital circuit to replace a scannable flip-flop with a non-scannable flip-flop in accordance with principles described herein.
FIGS. 5A-5D show illustrative logic gates that, in the example modification of FIG. 4, may be overloaded for concurrent use in performing both a logical function and a multiplexing function in accordance with principles described herein.
FIG. 6 shows an additional example modification of a scannable digital circuit to replace a scannable flip-flop with a non-scannable flip-flop in accordance with principles described herein.
FIG. 7 shows two scannable digital circuits to contrast a scannable digital circuit design that relies only on scannable flip-flops with a scannable digital circuit design that incorporates at least one non-scannable flip-flop in accordance with principles described herein.
FIGS. 8A-8B show illustrative applications for scannable digital circuits employing non-scannable flip-flops in accordance with principles described herein.
FIG. 9 shows an illustrative computing device that may incorporate and/or be used to design scannable digital circuits employing non-scannable flip-flops in accordance with principles described herein.

### DETAILED DESCRIPTION

Methods and apparatuses relating to scannable digital circuitry employing non-scannable flip-flops are described herein. Scannable flip-flops are generally deployed throughout the design of a scannable digital circuit to enable and facilitate testing of the circuit. The scannability features of such flip-flops, however, cause the scannable flip-flops to have longer setup-time requirements as compared to non-scannable flip-flops, thereby possibly limiting a maximum clock frequency that the circuit design can support if the flip-flop is used on a relatively critical path. Implementations described herein therefore relate to ways of replacing scannable flip-flops with non-scannable flip-flops on certain critical paths of a circuit design, even while maintaining full scannability of the entire design.

Various types of processors and other complex digital electronics may include microscopic circuitry that is so small and complex that it would be virtually impossible to verify the correctness and reliability of the circuitry without including special provisions in the circuit design to support testing of the design. This concept is sometimes referred to as Design for Testability (DFT) and may apply to central processing units (CPUs), graphics processing units (GPUs), other types of processors (e.g., microprocessors, etc.) and other complex digital electronics (e.g., application-specific integrated circuits (ASICs), field-programmable gate arrays (FPGAs), etc.). As used herein, digital circuits that have been designed to have specific features to enhance their testability (e.g., using DFT principles and methodologies such as will be described) are referred to as scannable digital circuits.

One tool that may be integrated into digital circuits in accordance with DFT principles is referred to as a scan chain. Scan chains may be integrated into a processor or other complex synchronous design to improve the controllability and observability of the circuit's internal state, thereby facilitating efficient and effective testing of the circuitry. Scan chains may be included within a synchronous digital circuit design such as may be implemented within the processors and other circuits mentioned above.

As used herein, a digital circuit may be referred to as synchronous when digital signals within the circuit are configured to propagate through combinatorial logic during a clock cycle and then are latched by memory elements called flip-flops at a particular part of each clock cycle (e.g., on every rising edge of a clock signal, on every falling edge of the clock signal, etc.). A flip-flop is a one-bit memory or storage element that is configured to latch (e.g., capture and store) the binary state of a digital signal as either HIGH (e.g., a logic value of '1') or LOW (e.g., a logic value of '0') when the particular part of the clock signal (e.g., the rising or falling edge) is detected.

To insert a scan chain into a synchronous design, the flip-flops within the design may be configured to operate not only in the normal operating mode (where the flip-flops would contribute to the desired functional operation of the digital circuit), but also in a scan mode that facilitates testing of the digital circuit. The scan mode may be enabled when a universal signal referred to as a scan enable signal is in one state (e.g., a HIGH state), while the normal mode would be enabled otherwise (e.g., when the scan enable signal is in the LOW state, in this example). When the scan enable signal puts the digital circuit into the scan mode, the flip-flops within the circuit may be connected to one another in a manner that forms a long shift register, called a scan chain. In this way, a data pattern may be passed through all the flip-flops in the scan chain by shifting the data into the scan chain at one particular scan input point (e.g., a flip-flop at the beginning of the scan chain) and reading the data out at a scan output point (a flip-flop at the end of the scan chain).

In this way, a large number of flip-flops (e.g., thousands, millions, or billions of flip-flops in certain designs) may be functionally tested by inserting known data patterns into the scan chain and verifying expected data patterns read out of the scan chain. In this way, a scan chain within a digital design may allow both: 1) controllability of the circuit (e.g., setting the state of the flip-flops by shifting data into the scan chain to thereby effectively control the inputs to the combinatorial logic), and 2) observability of the circuit (e.g., detecting the state of the flip-flops by shifting data out of the scan chain to thereby effectively observe the outputs of the combinatorial logic and the results of the logic operations performed by the circuit). Scan chains may therefore be useful at least for: 1) testing highly complex digital circuits (e.g., CPUs, GPUs, etc.) with potentially billions of transistors that are impractical to exhaustively test in other ways (e.g., by attempting to test every possible input combination); 2) performing fault detection for difficult-to-detect issues such as stuck-at faults (where a signal line is stuck at a logic 0 or 1), bridging faults (where two signal lines are shorted together), and/or other manufacturing defects; 3) performing automated test patterns and test vectors; and so forth.

While scannable flip-flops may provide important benefits for a synchronous digital circuit (e.g., allowing the circuit to implement a scan chain that facilitates robust testing such as described above), certain technical problems may also arise from the use of scannable flip-flops and scan chains. One technical problem associated with scannable flip-flops relates to timing and power limitations that scannable flip-flops may place on a circuit design, as will now be described.

As mentioned above, synchronous digital circuit designs include stages of combinatorial logic (e.g., logic gates, etc., through which digital signals propagate) separated by flip-flops that are configured to capture and store (i.e., latch) the signal at the same point in each clock cycle. Thus, for example, at a first rising edge of a universal clock signal provided to a set of flip-flops in a design (e.g., within one particular clock domain within a design that could include a plurality of clock domains associated with different clocks), a digital signal may be latched by a first flip-flop and begin propagating through a first stage of combinatorial logic. By a second rising edge of the clock signal (i.e., a rising edge immediately following the first rising edge), the signal may have propagated through the first stage of logic so that a second flip-flop may latch the signal. The signal would then begin propagating through a second stage of combinatorial logic so as to be latched at a third flip-flop by the time a third rising edge of the clock signal occurs, and so forth.

In order to be properly latched at a particular flip-flop, the signal must have arrived at a stable level or value (e.g., either a HIGH or LOW value) by a certain setup time associated with the flip-flop. For example, if a flip-flop has a setup time of 30 picoseconds (ps), the signal must be done propagating through the stage of combinatorial logic proceeding the flip flop (to have arrived at a stable value HIGH or LOW) at least 30 ps before the clock edge that will cause the signal to be latched at the flip-flop. If a stage of combinatorial logic is such that a signal may fail to satisfy this setup time requirement, the wrong value could be latched and various issues could occur (e.g., the circuit may not behave as intended). Accordingly, part of the design of a synchronous circuit includes analyzing each possible path that digital signals may take from flip-flop to flip-flop (e.g., through various different stages of combinatorial logic) to determine the longest possible paths that could be taken within a particular clock domain. If the longest paths through the various stages of combinatorial logic (also referred to as critical paths) take a period of T_{PD} (Time of Propagation Delay) units of time and the setup time of the flip-flop following the stage has a setup time of Ts (Time for Setup of the flip-flop) units, the period of the clock signal used to synchronize this clock domain should be no shorter than a sum of T_{PD} and T_{S}. For example, if the critical path has a propagation delay (T_{PD}) of 950 picoseconds (ps) and a flip-flop has a setup time (Tₛ) of 50 ps, the clock period should be no less than 950 ps + 50 ps = 1000 ps = 1.0 nanosecond (ns). In other words, the clock frequency of a clock signal used to synchronize this logic stage with this flip-flop should be no faster than 1.0 gigahertz (GHz) (since a 1.0 GHz clock has a period of 1.0 ns). It will be understood that certain other details of the flip-flop (e.g., hold times, propagation delays through the flip-flop itself, clock skew and jitter considerations, etc.) are ignored or incorporated into the example values given for purposes of this example.

In general, it may be desirable to clock the logic at or near a maximum frequency that will still be guaranteed to satisfy setup times and other requirements. For example, the faster a processor is clocked, the more operations it may be able to perform in a given amount of time, thereby optimizing the processor's performance. Conventionally, then, critical paths in a design may be identified so that combinatorial logic may be modified to reduce the overall length of those paths (while still meeting the setup time). For instance, referring to the numerical example above, if the T_{PD} of 950 ps on the most critical paths could be reduced by 25 ps to 925 ps, the clock period could then be reduced since 925 ps (T_{PD}) + 50 ps (T_{S}) = 975 ps. In this example, the maximum clock frequency could therefore be increased by about 25 megahertz (MHz) to 1.025 GHz without incurring any risk that the setup time on these critical paths would not be met.

Conventionally, the setup time of the scannable flip-flops is fixed (based on the design of the scannable flip-flop template or cell used throughout the design), such that changes to the combinatorial logic in the various logic stages are required in order to increase the maximum clock frequency (referred to as F_{MAX} of the clock). However, once the combinatorial logic has been modified to be as compact and efficient as possible (e.g., to achieve the shortest critical paths possible while still achieving the desired functionality), it becomes a technical problem to reduce the minimum period (or, equivalently, to increase F_{MAX}) any further. In other words, a timing-related technical problem may arise in which the circuit may not be reliably clocked any faster than allowed by the limits imposed by the critical paths of combinatorial logic.

To some extent, the digital circuitry (e.g., combinatorial logic and/or flip flops) could be made to operate faster by implementing transistors with lower threshold voltages that switch more quickly. However, as state transitions of the transistors increase in speed and voltage thresholds decrease, another technical problem arises relating to the power consumed by the circuitry. Lower threshold voltages correlate with not only more speed, but also with more leakage current, meaning that there is somewhat of a tradeoff between maximum clock frequency (F_{MAX}), which is generally desirable to be high, and power consumption, which is generally desirable to be low. The technical problem created by the design limitations described above may therefore be framed as either or both a time-related problem (e.g., the challenge of increasing F_{MAX} without increasing the power consumption once conventional avenues relating to shortening critical paths through combinatorial logic are expended) and a power-related problem (e.g., the challenge of decreasing power consumption without decreasing F_{MAX} once those same conventional avenues have been fully explored).

At least one technical solution to these technical problems involves implementing non-scannable flip-flops within the scannable digital circuit in accordance with principles described herein. While DFT parameters and requirements may call for full scannability in a design, methods and techniques described herein allow the scannable flip-flops typically used to implement scan chains described above to be replaced with non-scannable flip-flops without affecting the functionality of the scan chain. One technical effect of this replacement is that non-scannable flip-flops may have considerably less setup time than similar scannable flip-flops (e.g., scannable flip-flops that consume approximately the same power or that have approximately the same threshold voltages, etc.). As such, implementing non-scannable flip-flops for certain critical paths (but not for all paths) within a scannable digital circuit design may serve as a technical solution to the technical problems above since the critical setup times may be reduced instead of the propagation delay times (or in addition to the propagation delay times, after they have already been made as efficient as possible using techniques outside the scope of this disclosure).

For example, referring back to the numerical example offered above, if the propagation delay of the critical path through the combinatorial logic can go no lower than 950 ps, implementations described herein may allow for non-scannable flip-flops with a setup time of only 20 ps to replace the scannable flip-flops with their 50 ps setup time. If this flip-flop conversion leads the propagation delay of the combinatorial logic stage to only increase by 5 ps, for example, then the scan chain may be left intact, the power consumption of the circuit may remain approximately the same (as there is no change to the threshold voltage in this example), and yet the sum of T_{PD} and Ts on which the clock period and F_{MAX} depend may come down to the same amount of time (e.g., 955 ps + 20 ps = 975 ps) referred to in the example above. Accordingly, again as in the example above, F_{MAX} could safely be increased by 25 MHz to 1.025 GHz.

As will be described in detail herein, a non-scannable flip-flop may replace a scannable flip-flop even while leaving scannability functions intact by deconstructing the scanning features of the flip-flop and integrating them with the stage of combinatorial logic preceding the flip flop in a way that reduces the setup time more than it increases the combinatorial propagation delay time. For instance, as will be described and illustrated below, one or more gates at the output of the combinatorial logic stage may be overloaded to perform both their logical function (for which they are used in the logic stage) and a multiplexing function that would otherwise be performed by a scannable flip-flop. By configuring one or more gates to concurrently perform multiple roles in this way, the overall critical path may be shortened somewhat so that T_{PD} + Ts decreases in value overall. As another example, by removing logic from a non-scannable flip-flop responsible for a multiplexing function and adding it to a combinatorial logic stage, certain logic gates (e.g., responsible for buffering functions that may no longer be needed) may be eliminated in a manner that similarly shortens the critical path. In these and other examples, at least one technical effect of shortening the most critical paths within a design may be that an F_{MAX} associated with clocking the circuit can be increased, the power consumption of the circuit can be decreased (e.g., by using transistors with a higher threshold voltage), or a combination of both these benefits can be pursued, as may best serve the objectives of the circuit design.

Various implementations will now be described in more detail with reference to the figures. It will be understood that particular implementations described below are provided as non-limiting examples and may be applied in various situations. Additionally, it will be understood that other implementations not explicitly described herein may also fall within the scope of the claims set forth below. Non-scannable flip-flops implemented for scannable digital circuits in the ways described herein may result in any or all of the technical effects mentioned above, as well as various additional and/or alternative beneficial technical effects described and/or made apparent below.

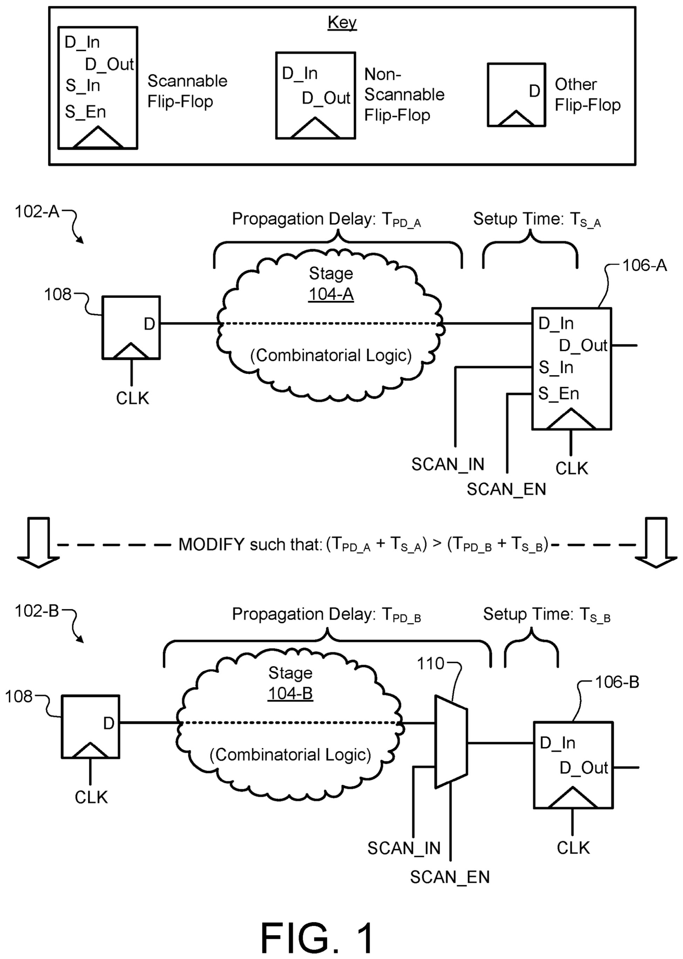

FIG. 1 shows certain aspects of how an illustrative scannable digital circuit may be modified to replace a scannable flip-flop with a non-scannable flip-flop in accordance with principles described herein. More particularly, as shown in FIG. 1, part of a scannable digital circuit 102-A illustrated above a dashed line may be modified in accordance with principles described herein to become an analogous part of a scannable digital circuit 102-B that exhibits the same function and general behavior of scannable digital circuit 102-A but has improved timing and/or power characteristics, as will be further described below. While only a small portion of the respective scannable digital circuits is illustrated in FIG. 1 (e.g., two flip-flops on a critical path and the combinatorial logic between them), it will be understood that the same or similar principles described in relation to this portion of the scannable digital circuit may be applied more widely to a number of critical paths (e.g., dozens, hundreds, or thousands of paths, etc.) to achieve the objectives of a particular implementation.

As shown, scannable digital circuit 102-A includes a stage 104-A of combinatorial logic that precedes a flip-flop 106-A. As indicated by a Key at the top of the figure (a key that will be understood to apply to FIG. 1 and other figures of this disclosure that will be further described below), flip-flop 106-A may be implemented as a scannable flip-flop that includes not only a data input (D_In) and a data output (D_Out), but also includes special provisions for testability using techniques that have been described (e.g., a scan chain and/or other DFT capabilities). More particularly, as shown, flip-flop 106-A includes a scan input (S_In) for receiving an input provided by a previous flip-flop within the scan chain (not explicitly shown in this figure) and a scan enable (S_En) for selecting whether flip-flop 106-A latches and outputs either: 1) the data input D_In (for use during a normal mode that contributes to functional operation of the circuit), or 2) the scan input S_In (for use during a scan mode that facilitates testing of the circuit in the ways described above). Flip-flop 106-A is also shown to include a clock input (labeled with a triangle at the bottom of the flip-flop) that controls when new data is captured/latched for storage by the flip-flop.

As shown in the implementation of scannable digital circuit 102-A illustrated in FIG. 1, the data input (D_In) of flip-flop 106-A receives a digital signal that has propagated through stage 104-A, the clock input receives a digital clock signal (CLK), the scan input (S_In) receives a SCAN_IN signal from another flip-flop (not shown) that will be assumed to have a less critical path than the one represented by stage 104-A, and the scan enable input (S_En) receives a SCAN_EN signal that may be universal throughout the circuit (and thus also does not contribute to any critical timing path as the digital input signal does). The data output (D_Out) will be understood to provide an output signal that may propagate through an additional stage of combinatorial logic to a subsequent flip-flop (not shown in FIG. 1).

As further shown in scannable digital circuit 102-A, a flip-flop 108 may precede the stage 104-A of combinatorial logic that precedes flip-flop 106-A in the overall data flow (which will be understood to move from left to right in this example). This flip-flop 108, as indicated by the Key ("Other Flip-Flop"), may represent any suitable flip-flop or flip-flops (e.g., one or more scannable flip-flops, non-scannable flip-flops, etc.) that provide a digital signal that propagates through stage 104-A and is eventually latched by flip-flop 106-A. The implementation details of flip-flop 108 are not shown in FIG. 1, as these may not be relevant to the analysis of stage 104-A and flip-flop 106-A being described. However, it is noted that flip-flop 108 is shown, in this example, to be clocked by the same clock signal as flip-flop 106-A, thus illustrating that these flip-flops are in the same clock domain.

Brackets above stage 104-A and flip-flop 106-A indicate certain timing parameters that may be determined for these elements. For example, if scannable digital circuit 102-A is in the design phase, these timing parameters may be determined by measuring similar circuits, by simulating the delays in design software, based on known timing parameters of the cells being used in the design, or in other suitable ways. More particularly, as shown, the propagation delay of a digital signal through stage 104-A may be represented by a parameter T_{PD_A}, while the setup time for flip-flop 106-A may be represented by a parameter T_{S_A}. As described above, for scannable digital circuit 102-A to function properly, the clock signal being used to clock both flip-flop 106-A and flip-flop 108 should have a maximum frequency (F_{MAX}) that corresponds to a clock period no longer than a sum of the propagation delay through the combinatorial logic and the setup time of the flip-flop (i.e., the period of F_{MAX} should be less than or equal to T_{PD_A} + T_{S_A}). In other words, if it is assumed that the flip-flops are configured to latch on rising edges of the clock signal (CLK), then after a first rising edge, the digital signal must propagate through stage 104-A of combinatorial logic to be stable at flip-flop 106-A at least the setup time (T_{S_A}) prior to the next rising edge.

Similarly, scannable digital circuit 102-B is shown in FIG. 1 to include a stage 104-B of combinatorial logic that precedes a flip-flop 106-B. As indicated by the Key, and in contrast to flip-flop 106-A, flip-flop 106-B may be implemented as a non-scannable flip-flop that includes a data input (D_In), a data output (D_Out), and a clock input (represented by a triangle) but does not include the scan input and the scan enable provided by the scannable flip-flop 106-A for the testability provisions described above. As has been described, this non-scannable flip-flop 106-B may have the advantage of a significantly shortened setup time. In other words, a setup time T_{S_B} of flip-flop 106-B may be less than the setup time T_{S_A} of flip-flop 106-A. However, it may be desirable still for flip-flop 106-B to be included within the scan chain and to support the scannability and testability features that have been described. Accordingly, as shown within FIG. 1 and as will be further described below, the logic needed to support the scannability features (e.g., including a multiplexing function to select between the data input signal and the scan input signal) may be deconstructed and extracted from the scannable flip-flop cell and then implemented together with or as a part of stage 104-B. For example, as represented by a multiplexer 110 in scannable digital circuit 102-B, a multiplexing function associated with scannable flip-flop 106-A may be extracted from the scannable flip-flop such that the non-scannable flip-flop 106-B may be used instead.

As will be described in more detail below, this modification from the scannable digital circuit 102-A with the scannable flip-flop 106-A to the scannable digital circuit 102-B with the non-scannable flip-flop 106-B may be performed in a manner that reduces a total amount of propagation time and allows for the circuitry of scannable digital circuit 102-B to potentially be clocked at a higher frequency (i.e., larger F_{MAX}) than the circuitry of scannable digital circuit 102-A. To illustrate, brackets above stage 104-B and flip-flop 106-B indicate corresponding timing parameters that may be determined for these elements (in similar ways as described above for the parameters of scannable digital circuit 102-A). For example, the propagation delay of a digital signal from flip-flop 108 through stage 104-B and multiplexer 110 may be represented by a parameter T_{PD_B}, while the setup time for flip-flop 106-B may be represented by a parameter T_{S_B}. As described above, this means that for scannable digital circuit 102-B to function properly, the clock signal being used to clock both flip-flop 106-B and flip-flop 108 should have a maximum frequency (F_{MAX}) that corresponds to a clock period no longer than a sum of the propagation delay through the combinatorial logic and the setup time of the flip-flop (i.e., the period of F_{MAX} should be less than or equal to T_{PD_B} + T_{S_B}). In other words, if it is assumed that the flip-flops are configured to latch on rising edges of the clock signal (CLK), then after a first rising edge, the digital signal must propagate through the combinatorial logic of stage 104-B and multiplexer 110 (which may be considered a part of stage 104-B in certain examples) to be stable at flip-flop 106-B at least the setup time (T_{S_B}) prior to the next rising edge.

The modification of the circuit to extract the multiplexing function from the flip-flop (e.g., scannable flip-flop 106-A) and implement it in the preceding logic stage (e.g., the multiplexer 110 associated with stage 104-B) may be performed in a manner that improves the overall timing situation. For example, as shown by the labeling on the dashed line separating scannable digital circuit 102-A from scannable digital circuit 102-B, the circuitry may be "MODIF[IED] such that: (T_{PD_A} + T_{S_A}) > (T_{PD_B} + T_{S_B})." As such, prior to the modifying of the scannable digital circuit design (e.g., the design of scannable digital circuit 102-A), a maximum frequency (F_{MAX}) at which the scannable digital circuit design is configured to be clocked may correspond to a first period longer than a sum of a particular delay threshold and a setup time for the scannable flip-flop (T_{S_A}), whereas subsequent to the modifying of the scannable digital circuit design (e.g., the design of scannable digital circuit 102-B), the maximum frequency (F_{MAX}) at which the scannable digital circuit design is configured to be clocked corresponds to a second period shorter than or equal to the sum of the delay threshold and the setup time for the scannable flip-flop (T_{S_A}). For example, the second period may be equal to the sum of T_{PD_B} and T_{S_B}, which, as mentioned above, may be less than the sum of T_{PD_A} and T_{S_A}. In some examples, this difference may allow a target delay threshold to be satisfied by scannable digital circuit 102-B that could not be satisfied by scannable digital circuit 102-A, as will be further described below.

To illustrate using example quantities from the numerical example above, T_{PD_A} could be 950 ps in a particular implementation, while T_{S_A} could be 50 ps. In this example, the minimum period (i.e., the sum of T_{PD_A} and T_{S_A}) would thus be 1000 ps (i.e., 1.0 ns) and the F_{MAX} for scannable digital circuit 102-A would be 1 GHz. After the modifications to generate the design of scannable digital circuit 102-B, however, the propagation delay T_{PD_B} of stage 104-B and multiplexer 110 may be slightly increased to 955 ps, while the setup time T_{S_B} of the non-scannable flip-flop is more significantly reduced to 20 ps. Accordingly, the overall minimum period (i.e., the sum of T_{PD_B} and T_{S_B}) may be reduced to 975 ps (i.e., 0.975 ns) and the F_{MAX} for scannable digital circuit 102-A may be increased to 1.025 GHz. These values will be understood to be provided only for the purposes of illustration and the increase in F_{MAX} may be less or more in other implementations.

Even as the timing situation is improved such that the maximum frequency can be increased (e.g., from 1.0 GHz to 1.025 GHz in the numerical example above), it is noted that the function of both scannable digital circuits 102-A and 102-B may be identical. For example, while the SCAN_IN signal and the SCAN_EN signal may be input to the scannable flip-flop 106-A in in scannable digital circuit 102-A, these signals may instead be input to the multiplexer 110 external to the non-scannable flip-flop 106-B in scannable digital circuit 102-B. In both cases, the multiplexing function may be performed to achieve the same result (e.g., the scan chain and scannability functions described above), but the timing parameters are shown to be improved for scannable digital circuit 102-B as compared to scannable digital circuit 102-A.

It will also be understood, as mentioned above, that the favorable timing parameters achieved by scannable digital circuit 102-B may additionally or alternatively be applied to achieve more favorable power parameters (e.g., in the event that power consumption is a more significant design constraint than F_{MAX} in a particular implementation). For example, prior to the modifying of the scannable digital circuit design (e.g., the design of scannable digital circuit 102-A), the scannable digital circuit design may be configured to produce a first power consumption when clocked at a particular maximum frequency. Then, subsequent to the modifying of the scannable digital circuit design (e.g., the design of scannable digital circuit 102-B), the scannable digital circuit design may be configured to produce a second power consumption when clocked at the same maximum frequency, where the second power consumption is lower than the first power consumption. In other words, the timing may be improved, but rather than applying the improvements to the maximum frequency, the improvements may be applied to the power consumption by using, for example, different transistors that implement the same logic and flip-flops but with higher threshold voltages (thereby trading the timing improvements for power consumption improvements). In some examples, improvements that may be achieved in this way may be applied to both the timing and power consumption of the circuit.

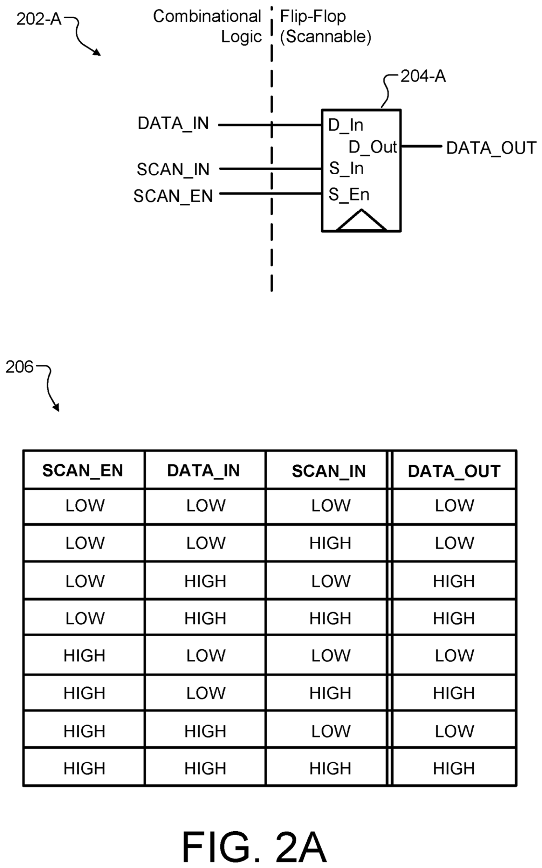

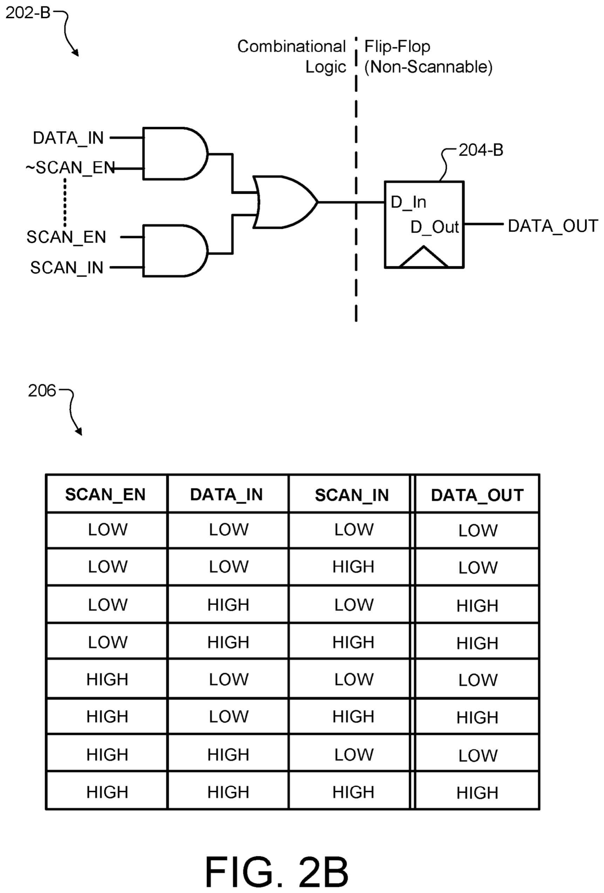

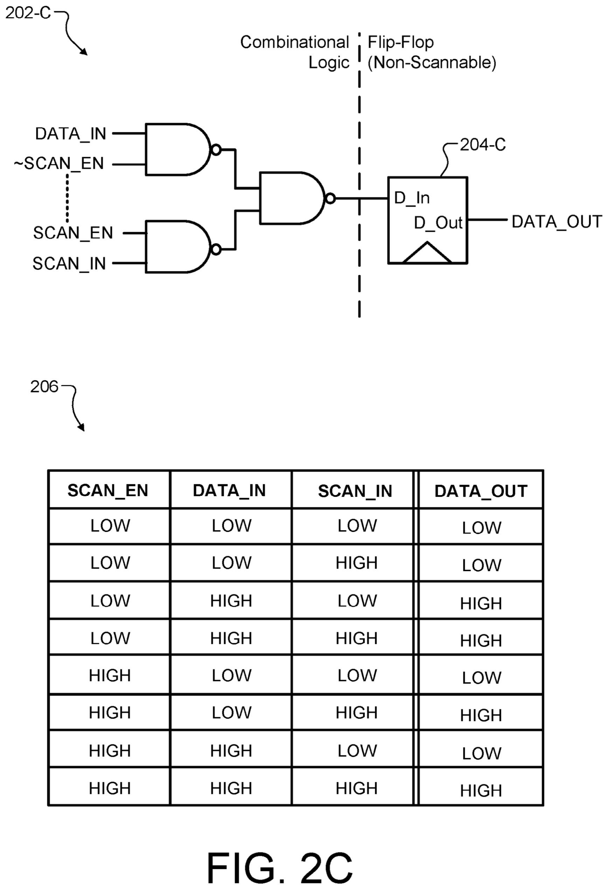

To illustrate how scannable digital circuits such as scannable digital circuits 102-A and 102-B may have the same functionality even with different timing and/or power consumption characteristics (e.g., transistor threshold voltages, etc.), FIGS. 2A-2C illustrate functional aspects of a scannable flip-flop (FIG. 2A) and several alternative ways that desired behaviors of the scannable flip-flop could instead be produced using logic gates at the output of a combinatorial logic stage preceding a non-scannable flip-flop (FIG. 2B and FIG. 2C).

FIG. 2A shows circuitry 202-A that includes a DATA_IN signal, a SCAN_IN signal, and a SCAN_EN signal being provided from a stage of combinatorial logic (on the left side of the dashed line, as labeled) to a scannable flip-flop 204-A (on the right side of the dashed line, as labeled). As indicated in the Key in FIG. 1, scannable flip-flop 204-A may be similar to the flip-flop 106-A described above. A chart 206 shows the functionality of circuitry 202-A. More particularly, for each possible combination that the SCAN_EN, DATA_IN, and SCAN_IN inputs may have (assuming these are each digital signals that can be only in a HIGH or LOW state), chart 206 shows the DATA_OUT signal that scannable flip-flop 204-A may latch and output.

As shown, the SCAN_EN signal may act as a multiplexer select signal to select between DATA_IN and SCAN_IN. Specifically, as shown, when SCAN_EN is LOW (i.e., the scan mode is off, so that the circuit operates in normal mode), the DATA_OUT signal follows the DATA_IN signal regardless of what the SCAN_IN signal does. Conversely, when SCAN_EN is HIGH (i.e., the scan mode is on, so that the circuit operates in scan mode), the DATA_OUT signal follows the SCAN_IN signal regardless of what the DATA_IN signal does.

FIG. 2B shows circuitry 202-B that includes the same DATA_IN signal, SCAN_IN signal, and SCAN_EN signal being processed within the stage of combinatorial logic (on the left side of the dashed line, as labeled) before arriving at a non-scannable flip-flop 204-B (on the right side of the dashed line, as labeled). As again indicated by the Key in FIG. 1, non-scannable flip-flop 204-B may be similar to the flip-flop 106-B described above. The same chart 206 is also shown in FIG. 2B as was described in relation to FIG. 2A. This illustrates that the logic in circuitry 202-B implements the same multiplexing function as logic internal to scannable flip-flop 204-A in circuitry 202-A. More particularly, for each possible combination that the SCAN_EN, DATA_IN, and SCAN_IN inputs may have (assuming these are each digital signals that can be only in a HIGH or LOW state), chart 206 again shows the DATA_OUT output signal latched and output by non-scannable flip-flop 204-B may follow DATA_IN when SCAN_EN is LOW and may follow SCAN_IN when SCAN_EN is HIGH. It will be understood that the ~SCAN_EN signal is an inverse of the SCAN_EN signal.

FIG. 2C shows circuitry 202-C that includes the same DATA_IN signal, SCAN_IN signal, and SCAN_EN signal being processed using different gates within the stage of combinatorial logic (on the left side of the dashed line, as labeled) to achieve a same result before arriving at a non-scannable flip-flop 204-C (on the right side of the dashed line, as labeled). Non-scannable flip-flop 204-C may be similar to non-scannable flip-flop 204-B and flip-flop 106-B described above (see Key in FIG. 1), and the same chart 206 is again shown in FIG. 2C as has been described previously in relation to FIGS. 2A and 2B. More specifically, chart 206 again shows how the logic in circuitry 202-C implements the same multiplexing function as does logic internal to scannable flip-flop 204-A in circuitry 202-A and as does combinatorial logic external to non-scannable flip-flop 204-B in circuitry 202-B.

Rather than two AND gates and an OR gate (as was used in circuitry 202-B), the example of circuitry 202-C uses three NAND gates, which may be more efficiently implemented with semiconductor technologies. In any case, the combination of FIGS. 2A-2C illustrates that the same function may be implemented in a variety of ways using different types of flip-flops and using different types of combinatorial logic (e.g., different combinations of logic gates). While each of FIGS. 2B and 2C show a potential way that a non-scannable flip-flop may be combined with combinatorial logic to functionally replace a scannable flip-flop (such as scannable flip-flop 204-A in FIG. 2A), it will be understood that the examples of circuitry 202-B and circuitry 202-C are not exhaustive of the various ways that circuits logically equivalent to circuit 202-A could be implemented. Various other types and/or combinations of logic gates (e.g., AND, NAND, OR, NOR, XOR, XNOR, etc.) could also be used.

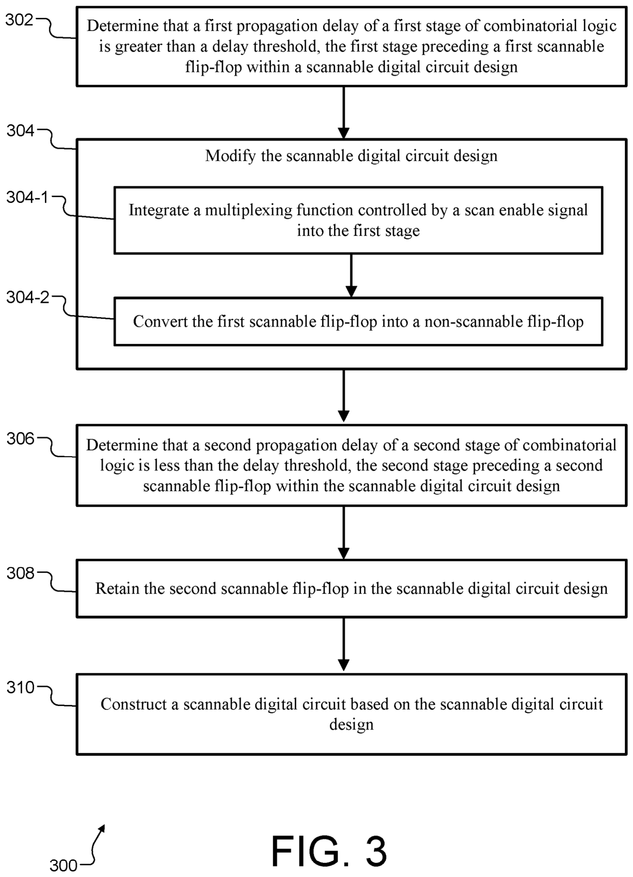

FIG. 3 shows an illustrative method 300 for implementing a non-scannable flip-flop within a scannable digital circuit in accordance with principles described herein. For example, method 300 may be performed by a computing system that includes a processor executing instructions configured to implement some or all of operations 302-310 of method 300. In other words, method 300 may be performed, in certain implementations, entirely as an automated process. In other implementations, one or more of the operations may be manually performed or assisted by, for example, other manufacturing equipment and/or personnel (e.g., a designer of a scannable digital circuit).

While FIG. 3 shows illustrative operations according to a specific implementation, it will be understood that other implementations of this method may omit, add to, reorder, and/or modify any of the operations that are explicitly represented in method 300. Additionally, while the operations of method 300 are illustrated with arrows suggestive of a sequential order of operation, it will be understood that one or more of the operations of method 300 may be performed concurrently (e.g., in parallel) with one another. As will be described in more detail below, operations 302-308 of method 300 may relate to planning and designing a scannable digital circuit, and may be performed by a computing system executing design software under direction of a designer or other user. Operation 310 may then relate to manufacturing, fabricating, building, or otherwise realizing the design created using operations 302-308. As such, this operation may involve computer-assisted manufacturing equipment such as a semiconductor fabrication system. Method 300 will now be described in more detail.

At operation 302, a computing system (which may be executing digital circuit design software) may determine that a first propagation delay of a first stage of combinatorial logic is greater than a delay threshold. For example, the first stage of combinatorial logic may precede a first scannable flip-flop within a scannable digital circuit design. The delay threshold may be associated with a target propagation delay for data paths within a particular clock domain of the scannable digital circuit being designed. For instance, to use the quantitative examples mentioned above, it may be desirable for F_{MAX} to be set to 1.025 GHz using scannable flip-flop cells having setup times equal to 50 ps. Accordingly, the propagation delay for every combinatorial logic stage between two scannable flip-flops in the design may be targeted to be no more than 925 ps, since a sum of 925 ps and 50 ps would correspond to the target minimum clock period of 975 ps that results in the desired 1.025 GHz maximum frequency. In this example, the delay threshold could therefore be 925 ps, and the computing system may determine, at operation 302, that certain stages of combinatorial logic within the design (including the first stage of combinatorial logic), have a propagation delay greater than this threshold. In other words, the first propagation delay of the first stage could be determined to be 950 ps or some other delay longer than 925 ps in this example. It will be understood that operation 302 may be performed after other techniques for optimizing the circuitry have been exhausted, such that the first propagation delay exceeds the delay threshold even after attempts have been made to use conventional techniques to make the combinatorial logic as compact and optimal as possible.

At operation 304, the computing system may modify the scannable digital circuit design based on the determination at operation 302 that the first propagation delay is greater than the delay threshold. As has been described, this modification may include at least two aspects, which are represented in method 300 as sub-operations 304-1 and 304-2 of operation 304. Specifically, as a first aspect of the modification of the design, sub-operation 304-1 indicates that the computing system may integrate a multiplexing function controlled by a scan enable signal into the first stage of combinatorial logic at an output of the first stage. For example, as illustrated in the examples of circuitry 202-B and circuitry 202-C above, logic gates may be added to the stage of combinatorial logic preceding the flip-flop to replicate the multiplexing function of the scannable flip-flop 204-A illustrated in FIG. 2A. Then, as a second aspect of the modification of the design, sub-operation 304-2 indicates that the computing system may convert the first scannable flip-flop into a non-scannable flip-flop (e.g., as illustrated by non-scannable flip-flops 204-B and 204-C following the multiplexing logic of the respective circuitry 202-B and 202-C above). As used herein, this converting of the flip-flops may be implemented by replacing the scannable flip-flop with the non-scannable flip-flop in the design.

As described above in relation to FIG. 1, the modifying of the scannable digital circuit design at operation 304 may be performed in a manner that improves the timing and/or the power consumption of the scannable digital circuit in some way. For example, if conventional techniques were insufficient to reduce the first propagation delay of the first stage of combinatorial logic to below the delay threshold, the modifying of the scannable digital circuit may reduce the setup time of the flip-flop (by converting from the scannable flip-flop to the non-scannable flip-flop) by enough to make up the difference between the first propagation delay and the target delay threshold. This may be true even if the integrating of the multiplexing function at sub-operation 304-1 causes the first propagation delay to increase. For instance, referring again to the quantitative example that has been given, the integrating of the multiplexing function at sub-operation 304-1 may cause the first propagation delay to increase from 350 ps to 355 ps, while the converting of the first scannable flip-flop into the non-scannable flip-flop at sub-operation 304-2 may cause the flip-flop setup time to be reduced from 50 ps to 20 ps. In the final analysis then, the sum of the first propagation delay and the setup time may decrease overall to allow for the targeted maximum frequency. Specifically, the sum of 355 ps and 20 ps (for the non-scannable flip-flop setup time) satisfies the 375 ps clock period that is targeted but that the sum of 350 ps and 50 ps (for the scannable flip-flop setup time) failed to satisfy in this example.

At operation 306, the computing system may determine that a second propagation delay of a second stage of combinatorial logic is less than the delay threshold. Similarly to the example of the first stage above, the second stage of combinatorial logic may precede a second scannable flip-flop within the scannable digital circuit design. In this case, however, the combinatorial logic that a digital signal must propagate through within the second stage is short enough that the second propagation delay is less than the delay threshold. For example, using the example delay threshold of 925 ps described above, the second propagation delay of the second stage could be determined to be only 900 ps or some other suitable value less than the threshold. In this example then, the targeted maximum frequency could be achieved using the scannable flip-flop with its longer setup time (e.g., 50 ps in the quantitative example above).

Accordingly, at operation 308, the computing system may retain the second scannable flip-flop in the scannable digital circuit design based on the determination at operation 306 that the second propagation delay is less than the delay threshold. The modifying of the scannable digital circuit design at operation 304 may thus provide certain benefits to more critical data paths such as through the first stage of combinatorial logic, and may be worth the effort and cost for such paths. However, for less critical data paths such as through the second stage of combinatorial logic, operation 308 shows that the effort required to perform the modification may be avoided and the original design (using the scannable flip-flop) may be used. In a scannable digital circuit design with millions or billions of scannable flip-flops and associated combinatorial logic stages between them, it may be desirable to exert the effort of modifying the circuitry in the manner of operation 304 only for the most critical data paths and not for all of the scannable flip-flops. For example, if the computing system determined that 99% of the propagation delays in the design were less than the delay threshold (as is the case with the second propagation delay) and the remaining 1% of the propagation delays in the design are greater than the delay threshold (as is the case with the first propagation delay), the circuit modification of operation 304 may be performed only to address those 1% of propagation delays, while the scannable flip-flop may be retained for the other 99% of the propagation delays.

At operation 310, the computing system may provide the scannable digital circuit design so that the scannable digital circuit may be fabricated (e.g., by a chip fabrication system such as mentioned above). For example, based on the scannable digital circuit design produced using operations 302-308, a fabrication system performing operation 310 may construct the scannable digital circuit to include at least the (modified) first stage of combinatorial logic, the non-scannable flip-flop, the (unmodified) second stage of combinatorial logic, and the second scannable flip-flop.

In some implementations, a method such as method 300 may be embodied as a process within a memory. For example, method 300 may be embodied by instructions stored in storage facilities (e.g., memories) described and illustrated herein. More particularly, a non-transitory computer-readable medium may store instructions that, when executed, cause a processor of a computing device to perform a process embodying method 300. Specifically, when executing the instructions on the non-transitory computer-readable medium, the processor may: 1) determine that a first propagation delay of a first stage of combinatorial logic is greater than a delay threshold, the first stage preceding a first scannable flip-flop within a scannable digital circuit design; 2) modify, based on the determining that the first propagation delay is greater than the delay threshold, the scannable digital circuit design to: integrate a multiplexing function controlled by a scan enable signal into the first stage at an output of the first stage, and convert the first scannable flip-flop into a non-scannable flip-flop; 3) determine that a second propagation delay of a second stage of combinatorial logic is less than the delay threshold, the second stage preceding a second scannable flip-flop within the scannable digital circuit design; and 4) retain, based on the determining that the second propagation delay is less than the delay threshold, the second scannable flip-flop in the scannable digital circuit design.

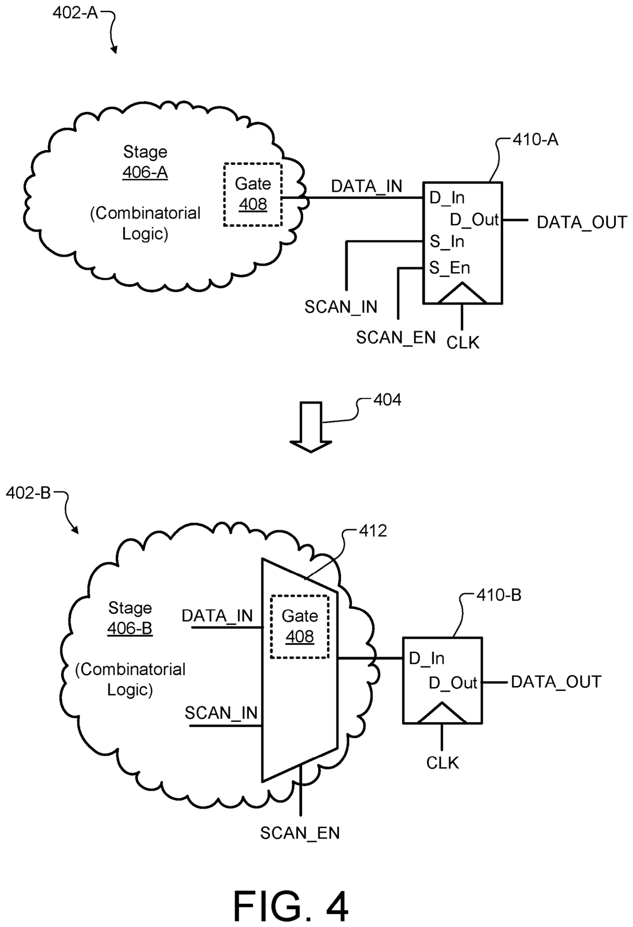

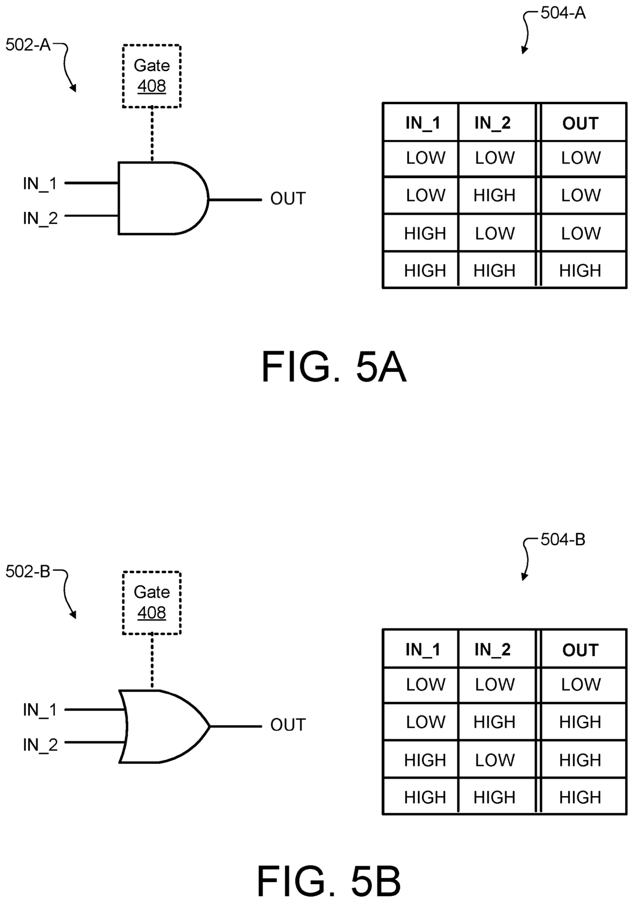

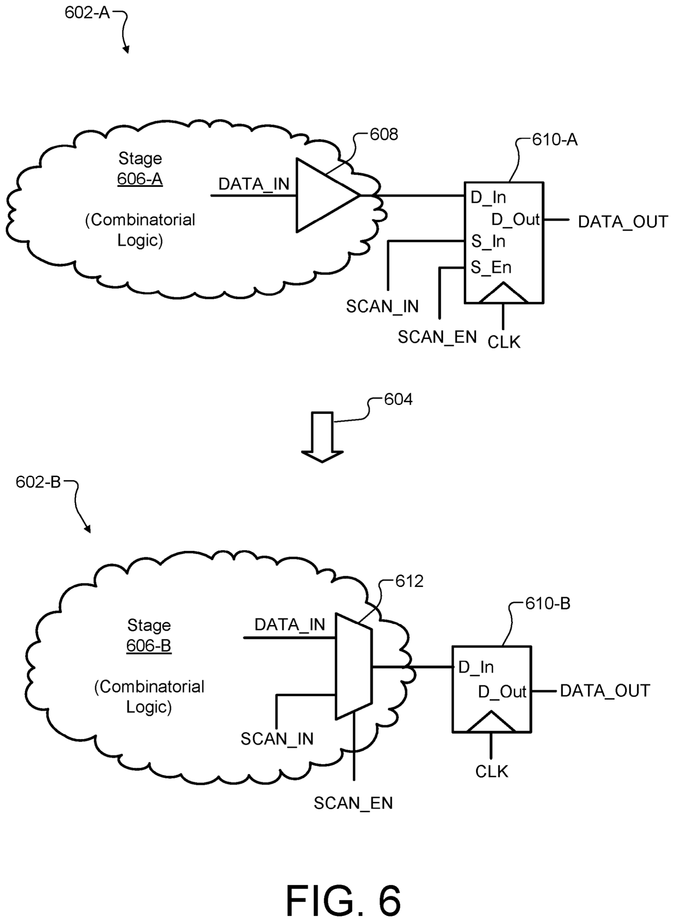

FIGS. 4-6 will now be described to provide more detailed examples of how modifications such as described in relation to operation 304 may be made to achieve the technical benefits that have been set forth. FIG. 4 shows a first example modification of a scannable digital circuit to replace a scannable flip-flop with a non-scannable flip-flop. In connection with FIG. 4, FIGS. 5A-5D show illustrative logic gates that may be overloaded for concurrent use in performing both a logical function and a multiplexing function. FIG. 6 then shows an additional example modification of a scannable digital circuit to replace a scannable flip-flop with a non-scannable flip-flop.

In FIG. 4, a design 402-A is shown to be converted into a modified design 402-B by a modification 404 such as described above in relation to operation 304 of method 300. More particularly, as shown, design 402-A includes a stage 406-A of combinatorial logic that may represent a relatively critical data path (e.g., such that the propagation delay associated with stage 406-A may exceed a delay threshold such as described above). As shown within stage 406-A, the output of stage 406-A may include a particular gate 408. For example, as will be described in more detail below, gate 408 could be any suitable logic gate such as an AND gate, an OR gate, a NAND gate, a NOR gate, an XOR gate, an XNOR gate, or the like. As shown, gate 408 is at the output of stage 406-A in the sense that gate 408 is the final gate that the digital signal may propagate through (though not the only gate, as it will be understood that stage 406-A may include various other gates in the combinatorial logic that are not explicitly shown) before being latched for the next clock cycle.

For this latching, design 402-A is further shown to include a scannable flip-flop 410-A that not only receives the DATA_IN signal from gate 408 of stage 406-A (and from other logic and flip-flops preceding it which are not explicitly shown in the figure), but also receives the CLK signal, the SCAN_IN signal, and the SCAN_EN signal that have been described. Scannable flip-flop 410-A is shown to output the DATA_OUT signal that has also been described. For example, the DATA_OUT signal may follow the behavior illustrated above in relation to chart 206.

After modification 404, modified design 402-B shows that a stage 406-B of combinatorial logic feeds its output into a non-scannable flip-flop 410-B that does not include the same scannability features as scannable flip-flop 410-A. However, as shown, certain logic 412 may be integrated into stage 406-B to accomplish the same multiplexing function that the scannable flip-flop previously performed prior to modification 404. For example, as shown, logic 412 may implement a multiplexor that selects between the DATA_IN signal and the SCAN_IN signal based on the SCAN_EN signal, all of which may be the same as received by the scannable flip-flop 410-A in design 402-A. As shown, gate 408 may be incorporated into or otherwise integrated within logic 412 so as to concurrently perform or assist with at least two functions: 1) whatever logic function gate 408 was used to perform in stage 406-A, and 2) the multiplexing function performed by logic 412.

In some cases, this integration may involve gate 408 being modified so as to accept more inputs or to perform a different logical function in accordance with other logic 412 being added. For example, prior to the modifying of scannable digital circuit design 402-A (at modification 404), stage 406-A may include, at the output of the stage, a logic gate 408 that is configured to perform a logical function with respect to a first digital signal and a second digital signal (not explicitly shown in FIG. 4). Then, after modification 404, the multiplexing function of scannable flip-flop 410-A may be integrated into the stage of combinatorial logic (now becoming stage 406-B) by introducing logic 412, at the output of the stage, as a plurality of logic gates that replaces and incorporates logic gate 408. This plurality of logic gates may be configured to perform both the multiplexing function and the logical function previously performed by gate 408 alone. For example, gate 408 may represent one of the gates shown in circuitry 202-B or circuitry 202-C shown above, which may be modified (e.g., accepting a third input, etc.) to continue performing the logical function it previously performed while also serving to perform the multiplexing function described in relation to FIGS. 2A-2C. In this way, stage 406-B may have a similar propagation delay as the stage 406-A had before modification 404, and any increase in delay may be more than offset by savings in the setup time of non-scannable flip-flop 410-B as compared to scannable flip-flop 410-A.

Gate 408 may be implemented by any suitable type of logic gate in design 402-A and may stay the same or be replaced by any suitable type of logic gate or gates that meet the criteria described above of continuing to perform the same logical function while also performing the multiplexing function that has been extracted from the scannable flip-flop. To illustrate a few examples of how gate 408 may be implemented, FIGS. 5A-5D show illustrative logic gates that, after modification 404, could be overloaded for concurrent use in performing both the logical function shown and the multiplexing function that has been described.

For example, FIG. 5A shows an implementation in which logic gate 408 is an AND gate 502-A that accepts a first digital signal (IN_1) and a second digital signal (IN_2) and is configured to produce an output signal (OUT) representing: 1) a logical HIGH value when the first digital signal and the second digital signal both represent the logical HIGH value; and 2) a logical LOW value otherwise. This logical function is illustrated by a chart 504-A, which shows that the OUT signal is LOW for every combination of IN_1 and IN_2 other than when they are both HIGH. Thus, if the OUT signal is equated with the DATA_IN signal of design 402-A, modification 404 could include adding a third input to AND gate 502-A for a ~SCAN_EN signal, and then feeding the OUT signal into an OR gate that also receives an output of an AND gate that ANDs together a SCAN_IN signal and a SCAN_EN signal. This type of example was illustrated above in relation to FIG. 2B, except that the DATA_IN signal in FIG. 2B would instead be implemented as the IN_1 and IN_2 signals being ANDed together with the ~SCAN_EN signal in a three-input AND gate.

As another example, FIG. 5B shows an implementation in which logic gate 408 is an OR gate 502-B that accepts a first digital signal (IN_1) and a second digital signal (IN_2) and is configured to produce an output signal (OUT) representing: 1) a logical LOW value when the first digital signal and the second digital signal both represent the logical LOW value; and 2) a logical HIGH value otherwise. This logical function is illustrated by a chart 504-B, which shows that the OUT signal is HIGH for every combination of IN_1 and IN_2 other than when they are both LOW. Thus, if the OUT signal is equated with the DATA_IN signal of design 402-A, modification 404 could include adding a third input to OR gate 502-B and/or changing the logic at the output in any suitable way so that the same ORing of the first and second digital signals occurs while also implementing the multiplexing function in which either the OUT signal or a SCAN_IN signal is selected based on a SCAN_EN signal.

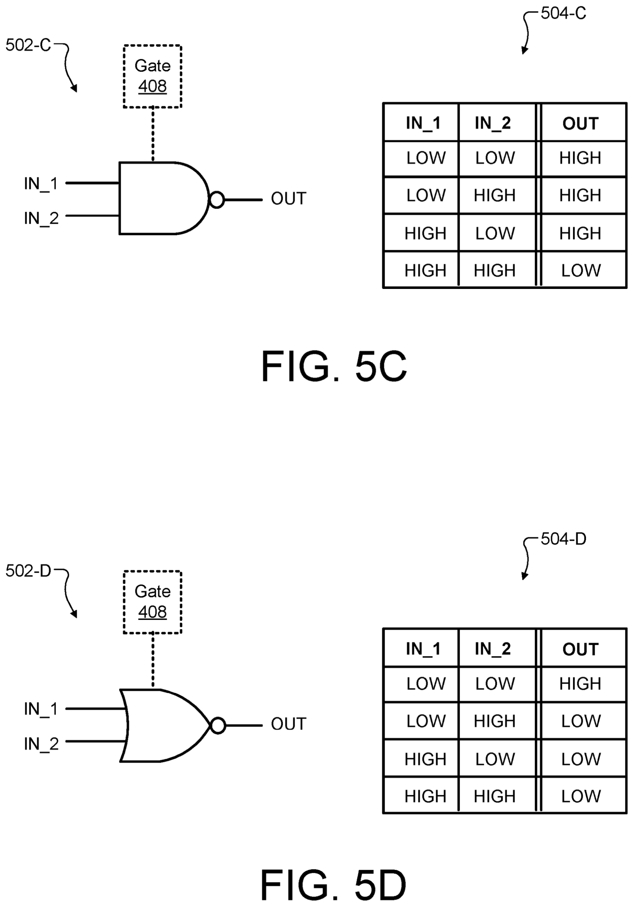

As another example, FIG. 5C shows an implementation in which logic gate 408 is an NAND gate 502-C that accepts a first digital signal (IN_1) and a second digital signal (IN_2) and is configured to produce an output signal (OUT) representing: 1) a logical LOW value when the first digital signal and the second digital signal both represent a logical HIGH value; and 2) the logical HIGH value otherwise. This logical function is illustrated by a chart 504-C, which shows that the OUT signal is HIGH for every combination of IN_1 and IN_2 other than when they are both HIGH. Thus, if the OUT signal is equated with the DATA_IN signal of design 402-A, modification 404 could include adding a third input to NAND gate 502-C and/or changing the logic at the output in any suitable way so that the same NANDing of the first and second digital signals occurs while also implementing the multiplexing function in which either the OUT signal or a SCAN_IN signal is selected based on a SCAN_EN signal.

As yet another example, FIG. 5D shows an implementation in which logic gate 408 is an NOR gate 502-D that accepts a first digital signal (IN_1) and a second digital signal (IN_2) and is configured to produce an output signal (OUT) representing: 1) a logical HIGH value when the first digital signal and the second digital signal both represent a logical LOW value; and 2) the logical LOW value otherwise. This logical function is illustrated by a chart 504-D, which shows that the OUT signal is LOW for every combination of IN_1 and IN_2 other than when they are both LOW. Thus, if the OUT signal is equated with the DATA_IN signal of design 402-A, modification 404 could include adding a third input to NOR gate 502-D and/or changing the logic at the output in any suitable way so that the same NORing of the first and second digital signals occurs while also implementing the multiplexing function in which either the OUT signal or a SCAN_IN signal is selected based on a SCAN_EN signal.

As mentioned above, FIG. 6 shows an additional example modification of a scannable digital circuit to replace a scannable flip-flop with a non-scannable flip-flop in accordance with principles described herein. In FIG. 6, a design 602-A is shown to be converted into a modified design 602-B by a modification 604 such as described above in relation to operation 304 of method 300. More particularly, as shown, design 602-A includes a stage 606-A of combinatorial logic that may represent a relatively critical data path (e.g., such that the propagation delay associated with stage 606-A may exceed a delay threshold such as described above). As shown within stage 606-A, the output of the stage may include a buffer 608. For example, buffer 608 may be implemented as a non-inverting buffer (as shown) or as an inverting buffer (or NOT gate, not shown in this example). As shown, buffer 608 is at the output of stage 606-A in the sense that buffer 608 is the final gate that the digital signal may propagate through (though not the only gate, as it will be understood that stage 606-A may include various other gates in the combinatorial logic not explicitly shown) before being latched for the next clock cycle.

For this latching, design 602-A is further shown to include a scannable flip-flop 610-A that not only receives the DATA_IN signal from buffer 608 of stage 606-A, but also receives the CLK signal, the SCAN_IN signal, and the SCAN_EN signal that have been described. Scannable flip-flop 610-A is shown to output the DATA_OUT signal that has also been described. For example, the DATA_OUT signal may follow the behavior illustrated above in relation to chart 206.

After modification 604, modified design 602-B shows that a stage 606-B of combinatorial logic feeds its output into a non-scannable flip-flop 610-B that does not include the same scannability features as scannable flip-flop 610-A. However, as shown, additional logic 612 may be integrated into stage 606-B to accomplish the same multiplexing function that the scannable flip-flop previously performed prior to modification 604. For example, as shown, logic 612 may implement a multiplexor that selects between the DATA_IN signal and the SCAN_IN signal based on the SCAN_EN signal, all of which may be the same as received by the scannable flip-flop 610-A in design 602-A. In a similar manner to how gate 408 was incorporated into or otherwise integrated within logic 412 in the example described above, a buffering function of buffer 608 may be performed by the same logic 612 that is now included to perform the multiplexing function that was handled by scannable flip-flop 610-A in design 602-A. Accordingly, the additional logic 612 may replace buffer 608 and any delay specifically associated with buffer 608 may be eliminated since it is merged with the delay associated with the multiplexing function (which occurs regardless of whether the scannable flip-flop or the non-scannable flip-flop is employed).

The buffering function performed by buffer 608 in stage 606-A and by logic 612 in stage 606-B may prepare the digital signal (e.g., the DATA_IN signal in this example) to be latched by the scannable flip-flop in any suitable way. For example, the buffering function may involve boosting the digital signal to ensure there is sufficient drive strength and an acceptable voltage for the input requirements of the flip-flop, improving the integrity of the signal (e.g., cleaning up the signal or removing noise that may have been introduced onto the signal), and/or otherwise buffering the signal to ensure that design requirements are met for the signal to be latched by the flip-flop. As such, FIG. 6 illustrates that prior to the modifying of the scannable digital circuit design 602-A (at modification 604), stage 606-A may include at least one logic gate (e.g., an inverting buffer, a non-inverting buffer, a plurality of such buffering gates, etc.) at the output of the stage, the logic gate being configured to perform the buffering function to prepare a digital signal to be latched by scannable flip-flop 610-A. Then, after modification 604, the multiplexing function of scannable flip-flop 610-A may be integrated into the combinatorial logic stage (now becoming stage 606-B) by introducing a plurality of logic gates at the output of stage 606-B to replace the logic gate (i.e., to take the place of buffer 608). This plurality of logic gates may be configured, for instance, to perform both the multiplexing function and the buffering function. In this way, stage 606-B may have a similar propagation delay as the stage 606-A had before modification 604, and any increase in delay may be more than offset by savings in the setup time of non-scannable flip-flop 610-B as compared to scannable flip-flop 610-A.

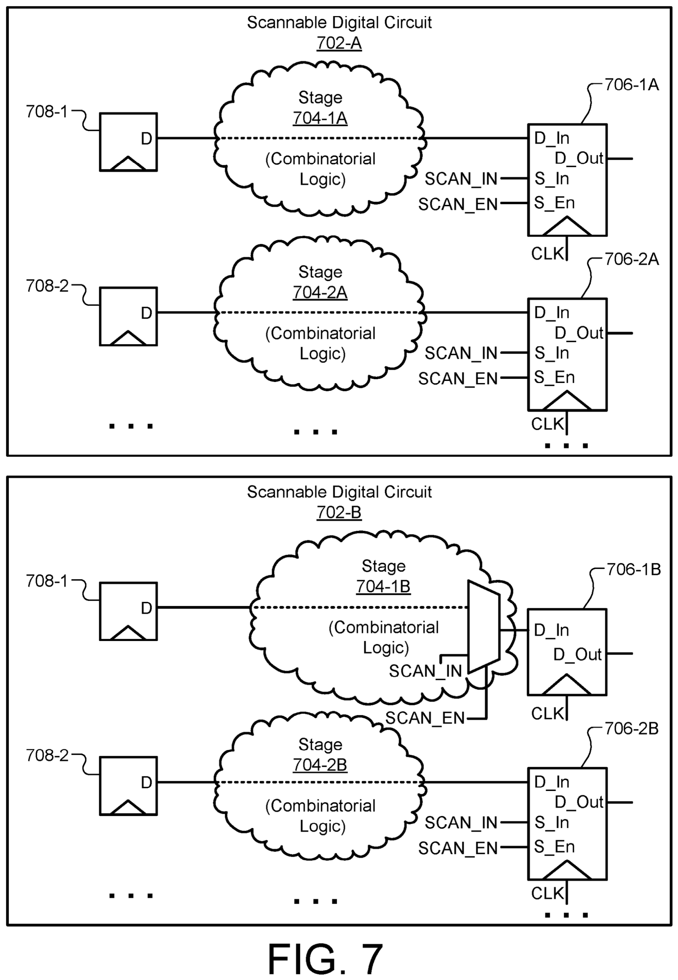

FIG. 7 shows two scannable digital circuits to contrast a scannable digital circuit design that relies only on scannable flip-flops with a scannable digital circuit design that incorporates at least one non-scannable flip-flop in accordance with principles described herein. More specifically, as shown, a first scannable digital circuit 702-A is shown to include multiple stages of combinatorial logic (including stages 704-1A, 704-2A and other similar stages represented by an ellipsis) that precede respective scannable flip-flops (including a scannable flip-flop 706-1A following stage 704-1A, a scannable flip-flop 706-2A following stage 704-2A, and other scannable flip-flops following the other stages of combinatorial logic as represented by an ellipsis).

In this first scannable digital circuit 702-A, each stage of combinatorial logic (e.g., stages 704-1A, 704-2A, and so forth) is shown to process a digital signal provided by at least one preceding flip-flop in the design (e.g., a flip-flop 708-1 providing a digital signal that propagates through stage 704-1A, a flip-flop 708-2 providing a digital signal that propagates through stage 704-2A, etc.). Additionally, the logic stages 704-1A, 704-2A, and so forth, are also shown to each have an output that is latched by a scannable flip-flop (e.g., scannable flip-flops 706-1A, 706-2A, and so forth) that receives not only the data input from the respective logic stage, but also receives SCAN_IN and SCAN_EN signals that have been described. In other words, as shown, scannable digital circuit 702-A may include a first stage of combinatorial logic (e.g., stage 704-1A), a first scannable flip-flop (scannable flip-flop 706-1A) configured to receive an output of the first stage and to perform a multiplexing function controlled by a scan enable signal, a second stage of combinatorial logic (stage 704-2A), a second scannable flip-flop (e.g., scannable flip-flop 706-2A) configured to receive an output of the second stage and to perform the multiplexing function controlled by the scan enable signal, and so forth for any number of other stages of combinatorial logic and associated scannable flip-flops.

As further shown in FIG. 7, a second scannable digital circuit 702-B is shown to include also multiple stages of combinatorial logic (including stages 704-1B, 704-2B and other similar stages represented by an ellipsis) that precede respective flip-flops of different types (e.g., a non-scannable flip-flop 706-1B following stage 704-1B, a scannable flip-flop 706-2B following stage 704-2B, and other scannable and/or non-scannable flip-flops following the other stages of combinatorial logic as represented by an ellipsis). In other words, while first scannable digital circuit 702-A may represent a more typical or conventional scannable digital circuit (with exclusively scannable flip-flops), second scannable digital circuit 702-B will be understood to represent a scannable digital circuit that, in accordance with principles described herein, includes a combination of both scannable flip-flops and non-scannable flip-flops.

In this second scannable digital circuit 702-B, each stage of combinatorial logic (e.g., stages 704-1B, 704-2B, and so forth) is shown to process a digital signal provided by at least one preceding flip-flop in the design (e.g., the same flip-flops 708-1 and 708-2 described above). Additionally, the logic stages 704-1B, 704-2B, and so forth, are also shown to each have an output that is latched by a flip-flop (e.g., non-scannable flip-flop 706-1B, scannable flip-flop 706-2B, and so forth) that receives the data input from the respective logic stage, but may or may not also receive the SCAN_IN and SCAN_EN signals that have been described. More particularly, as shown, scannable digital circuit 702-A may include a first stage of combinatorial logic (e.g., stage 704-1B) configured to perform, at an output of the first stage, a multiplexing function (represented by the multiplexor shown to be integrated within stage 704-1B) controlled by a scan enable signal; a non-scannable flip-flop (e.g., non-scannable flip-flop 706-1B) configured to receive the output of the first stage after the multiplexing function is performed; a second stage of combinatorial logic (e.g., stage 704-2B); and a scannable flip-flop (e.g., scannable flip-flop 706-2B) configured to receive an output of the second stage and to perform the multiplexing function controlled by the scan enable signal.

As has been described, scannable digital circuit designs may include both types of logic stages and flip-flops as may be convenient for meeting timing and/or power consumption targets. For example, referring to scannable digital circuit 702-B, it will be understood that logic stages with integrated multiplexing functions and corresponding non-scannable flip-flops (e.g., similar to stage 704-1B and non-scannable flip-flop 706-1B) may be included throughout the design to address various critical paths for which delay thresholds are difficult to meet using conventional techniques. At the same time, it will also be understood that logic stages without integrated multiplexing functions and corresponding scannable flip-flops (e.g., similar to stage 704-2B and scannable flip-flop 706-2B) may also be included throughout the design to more efficiently and conveniently handle less critical paths for which delay thresholds can be satisfied using conventional techniques.

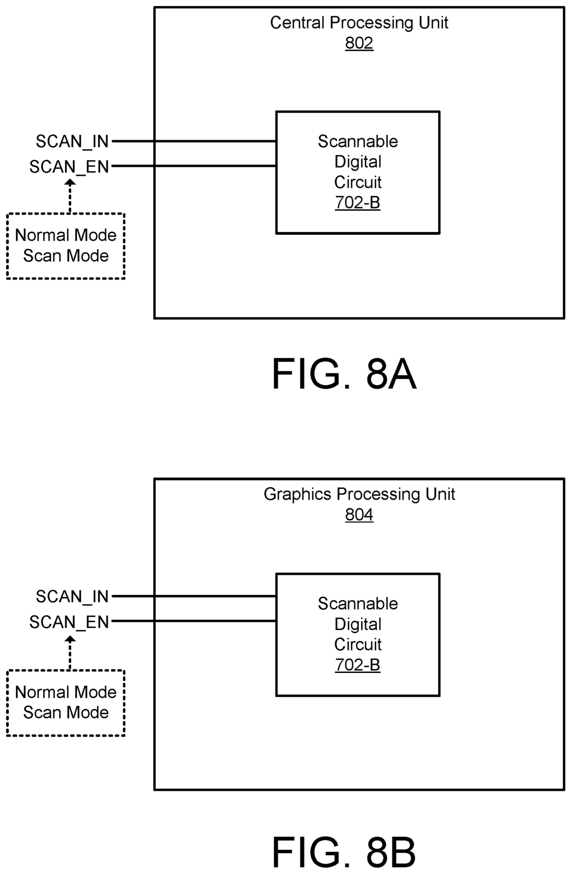

FIGS. 8A-8B show illustrative applications for scannable digital circuits employing non-scannable flip-flops in accordance with principles described herein. More particularly, FIG. 8A shows an implementation of second scannable digital circuit 702-B that is implemented within a central processing unit (CPU) 802 and is configured, based on the scan enable signal (e.g., SCAN_EN), to operate in either: 1) a normal mode that contributes to functional operation of CPU 802, or 2) a scan mode that facilitates testing of CPU 802. As shown, the SCAN_EN signal may be a global input to CPU 802 that will be understood to fan out to drive the scan enable inputs of all the scannable flip-flops and corresponding multiplexing functions of the non-scannable flip-flops. The SCAN_IN signal is also shown to be an input to CPU 802 and will be understood to represent a scan input for a first flip-flop in the scan chain shift register.

Similarly, FIG. 8B shows an implementation of second scannable digital circuit 702-B that is implemented within a graphics processing unit (GPU) 804 and is configured, based on the scan enable signal (e.g., SCAN_EN), to operate in either: 1) a normal mode that contributes to functional operation of GPU 804, or 2) a scan mode that facilitates testing of GPU 804. Similarly as described above in relation to CPU 802, the SCAN_EN signal may be a global input to GPU 804 that will be understood to fan out to drive the scan enable inputs of all the scannable flip-flops and corresponding multiplexing functions of the non-scannable flip-flops. The SCAN_IN signal is then an input to GPU 804 that will be understood to represent a scan input for a first flip-flop in the scan chain shift register. While CPU 802 and GPU 804 are shown as specific examples of where scannable digital circuits employing non-scannable flip-flops may be used, it will be understood that such circuits may be implemented in a variety of other (i.e., non-CPU and non-GPU) applications of digital circuitry such as have been described.

As has been mentioned, various methods and processes described herein may be implemented at least in part as instructions embodied in a non-transitory computer-readable medium and executable by one or more computing devices. In general, a processor (e.g., a microprocessor) receives instructions, from a non-transitory computer-readable medium (e.g., a memory, etc.), and executes those instructions, thereby performing one or more operations such as the operations described herein. Such instructions may be stored and/or transmitted using any of a variety of known computer-readable media.

A computer-readable medium (also referred to as a processor-readable medium) includes any non-transitory medium that participates in providing data (e.g., instructions) that may be read by a computer (e.g., by a processor of a computer). Such a medium may take many forms, including, but not limited to, non-volatile media, and/or volatile media. Non-volatile media may include, for example, optical or magnetic disks and other persistent memory. Volatile media may include, for example, dynamic random-access memory (DRAM), which typically constitutes a main memory.

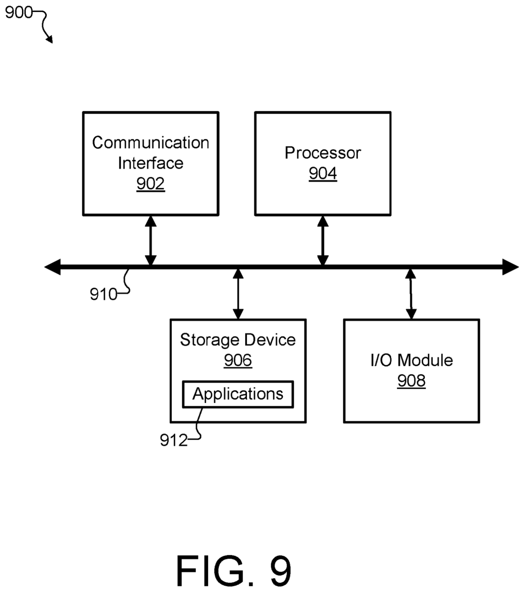

FIG. 9 shows an illustrative computing device 900 that may incorporate and/or be used to design scannable digital circuits employing non-scannable flip-flops in accordance with principles described herein. As shown in FIG. 9, computing device 900 may include a communication interface 902, a processor 904 (which may represent an implementation of CPU 802), a storage device 906, and an input/output (I/O) module 908 communicatively connected via a communication infrastructure 910. While an illustrative computing device 900 is shown in FIG. 9, the components illustrated in FIG. 9 are not intended to be limiting. Additional or alternative components may be used in other embodiments. Components of computing device 900 shown in FIG. 9 will now be described in additional detail.

Communication interface 902 may be configured to communicate with one or more computing devices. Examples of communication interface 902 include, without limitation, a wired network interface (such as a network interface card), a wireless network interface (such as a wireless network interface card), a modem, an audio/video connection, and any other suitable interface.

Processor 904 generally represents any type or form of processing unit capable of processing data or interpreting, executing, and/or directing execution of one or more of the instructions, processes, and/or operations described herein. Processor 904 may direct execution of operations in accordance with one or more applications 912 or other computer-executable instructions such as may be stored in storage device 906 or another computer-readable medium.

Storage device 906 may include one or more data storage media, devices, or configurations and may employ any type, form, and combination of data storage media and/or device. For example, storage device 906 may include, but is not limited to, a hard drive, network drive, flash drive, magnetic disc, optical disc, RAM, dynamic RAM, other non-volatile and/or volatile data storage units, or a combination or sub-combination thereof. Electronic data, including data described herein, may be temporarily and/or permanently stored in storage device 906. For example, data representative of one or more executable applications 912 configured to direct processor 904 to perform any of the operations described herein may be stored within storage device 906. In some examples, data may be arranged in one or more databases residing within storage device 906.

I/O module 908 may include one or more I/O modules configured to receive user input and provide user output. One or more I/O modules may be used to receive input for a single virtual experience. I/O module 908 may include any hardware, firmware, software, or combination thereof supportive of input and output capabilities. For example, I/O module 908 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 908 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 908 is configured to provide graphical data to a display for presentation to a user. The graphical data may be representative of one or more graphical user interfaces and/or any other graphical content as may serve a particular implementation.

The following clauses describe implementations of non-scannable flip-flops for scannable digital circuits in accordance with principles described herein.

Clause 1. A scannable digital circuit comprising: a first stage of combinatorial logic configured to perform, at an output of the first stage, a multiplexing function controlled by a scan enable signal; a first flip-flop configured to receive the output of the first stage after the multiplexing function is performed, the first flip-flop being a non-scannable flip-flop; a second stage of combinatorial logic; and a second flip-flop configured to receive an output of the second stage, the second flip-flop being a scannable flip-flop that is configured to perform the multiplexing function controlled by the scan enable signal.

Clause 2. The scannable digital circuit of clause 1, wherein: the multiplexing function is performed by the first stage using a plurality of logic gates at the output of the first stage, the plurality of logic gates being further configured to perform a buffering function to prepare a first digital signal to be latched by the first flip-flop; and the second stage includes a logic gate at the output of the second stage, the logic gate configured to perform the buffering function to prepare a second digital signal to be latched by the second flip-flop.

Clause 3. The scannable digital circuit of clause 1, implemented within a central processing unit (CPU) and configured, based on the scan enable signal, to operate in either: a normal mode that contributes to functional operation of the CPU, or a scan mode that facilitates testing of the CPU.

Clause 4. The scannable digital circuit of clause 1, implemented within a graphics processing unit (GPU) and configured, based on the scan enable signal, to operate in either: a normal mode that contributes to functional operation of the GPU, or a scan mode that facilitates testing of the GPU.

Clause 5. A method comprising: determining that a first propagation delay of a first stage of combinatorial logic is greater than a delay threshold, the first stage preceding a first scannable flip-flop within a scannable digital circuit design; modifying, based on the determining that the first propagation delay is greater than the delay threshold, the scannable digital circuit design to: integrate a multiplexing function controlled by a scan enable signal into the first stage at an output of the first stage, and convert the first scannable flip-flop into a non-scannable flip-flop; determining that a second propagation delay of a second stage of combinatorial logic is less than the delay threshold, the second stage preceding a second scannable flip-flop within the scannable digital circuit design; and retaining, based on the determining that the second propagation delay is less than the delay threshold, the second scannable flip-flop in the scannable digital circuit design.

Clause 6. The method of clause 5, wherein: prior to the modifying of the scannable digital circuit design, the first stage includes a logic gate at the output of the first stage, the logic gate being configured to perform a buffering function to prepare a digital signal to be latched by the first scannable flip-flop; and the multiplexing function is integrated into the first stage by introducing a plurality of logic gates at the output of the first stage to replace the logic gate, the plurality of logic gates being configured to perform both the multiplexing function and the buffering function.

Clause 7. The method of clause 5, wherein: prior to the modifying of the scannable digital circuit design, the first stage includes a logic gate at the output of the first stage, the logic gate being configured to perform a logical function with respect to a first digital signal and a second digital signal; and the multiplexing function is integrated into the first stage by introducing a plurality of logic gates at the output of the first stage to replace the logic gate, the plurality of logic gates being configured to perform both the multiplexing function and the logical function.

Clause 8. The method of clause 7, wherein the logic gate is an AND gate configured to produce an output signal representing: a logical HIGH value when the first digital signal and the second digital signal both represent the logical HIGH value; and a logical LOW value otherwise.

Clause 9. The method of clause 7, wherein the logic gate is a NAND gate configured to produce an output signal representing: a logical LOW value when the first digital signal and the second digital signal both represent a logical HIGH value; and the logical HIGH value otherwise.

Clause 10. The method of clause 7, wherein the logic gate is an OR gate configured to produce an output signal representing: a logical LOW value when the first digital signal and the second digital signal both represent the logical LOW value; and a logical HIGH value otherwise.

Clause 11. The method of clause 7, wherein the logic gate is a NOR gate configured to produce an output signal representing: a logical HIGH value when the first digital signal and the second digital signal both represent a logical LOW value; and the logical LOW value otherwise.

Clause 12. The method of clause 5, wherein: prior to the modifying of the scannable digital circuit design, a maximum frequency at which the scannable digital circuit design is configured to be clocked corresponds to a first period longer than a sum of the delay threshold and a setup time for the first scannable flip-flop; and subsequent to the modifying of the scannable digital circuit design, the maximum frequency at which the scannable digital circuit design is configured to be clocked corresponds to a second period shorter than or equal to the sum of the delay threshold and the setup time.

Clause 13. The method of clause 5, wherein: prior to the modifying of the scannable digital circuit design, the scannable digital circuit design produces a first power consumption when clocked at a maximum frequency; and subsequent to the modifying of the scannable digital circuit design, the scannable digital circuit design produces a second power consumption when clocked at the maximum frequency, the second power consumption being lower than the first power consumption.

Clause 14. The method of clause 5, further comprising constructing a scannable digital circuit based on the scannable digital circuit design, the scannable digital circuit including the first stage of combinatorial logic, the non-scannable flip-flop, the second stage of combinatorial logic, and the second scannable flip-flop.

Clause 15. The method of clause 14, wherein the scannable digital circuit is implemented within a central processing unit (CPU) and configured, based on the scan enable signal, to operate in either: a normal mode that contributes to functional operation of the CPU, or a scan mode that facilitates testing of the CPU.

Clause 16. The method of clause 14, wherein the scannable digital circuit is implemented within a graphics processing unit (GPU) and configured, based on the scan enable signal, to operate in either: a normal mode that contributes to functional operation of the GPU, or a scan mode that facilitates testing of the GPU.

Clause 17. A non-transitory computer-readable medium storing instructions that, when executed, cause a processor of a computing device to perform a process comprising: determining that a first propagation delay of a first stage of combinatorial logic is greater than a delay threshold, the first stage preceding a first scannable flip-flop within a scannable digital circuit design; modifying, based on the determining that the first propagation delay is greater than the delay threshold, the scannable digital circuit design to: integrate a multiplexing function controlled by a scan enable signal into the first stage at an output of the first stage, and convert the first scannable flip-flop into a non-scannable flip-flop; determining that a second propagation delay of a second stage of combinatorial logic is less than the delay threshold, the second stage preceding a second scannable flip-flop within the scannable digital circuit design; and retaining, based on the determining that the second propagation delay is less than the delay threshold, the second scannable flip-flop in the scannable digital circuit design.

Clause 18. The non-transitory computer-readable medium of clause 17, wherein: prior to the modifying of the scannable digital circuit design, the first stage includes a logic gate at the output of the first stage, the logic gate being configured to perform a buffering function to prepare a digital signal to be latched by the first scannable flip-flop; and the multiplexing function is integrated into the first stage by introducing a plurality of logic gates at the output of the first stage to replace the logic gate, the plurality of logic gates being configured to perform both the multiplexing function and the buffering function.

Clause 19. The non-transitory computer-readable medium of clause 17, wherein: prior to the modifying of the scannable digital circuit design, the first stage includes a logic gate at the output of the first stage, the logic gate being configured to perform a logical function with respect to a first digital signal and a second digital signal; and the multiplexing function is integrated into the first stage by introducing a plurality of logic gates at the output of the first stage to replace the logic gate, the plurality of logic gates being configured to perform both the multiplexing function and the logical function.

Clause 20. The non-transitory computer-readable medium of clause 17, wherein: prior to the modifying of the scannable digital circuit design, a maximum frequency at which the scannable digital circuit design is configured to be clocked corresponds to a first period longer than a sum of the delay threshold and a setup time for the first scannable flip-flop; and subsequent to the modifying of the scannable digital circuit design, the maximum frequency at which the scannable digital circuit design is configured to be clocked corresponds to a second period shorter than or equal to the sum of the delay threshold and the setup time.

Various implementations of the systems and techniques described herein can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

A number of implementations have been described. Nevertheless, it will be understood that various modifications may be made without departing from the spirit and scope of the description and claims. In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

Specific structural and functional details disclosed herein are merely representative for purposes of describing example implementations. Example implementations, however, may be embodied in many alternate forms and should not be construed as limited to only the implementations set forth herein.

It will be understood that, although the terms first, second, etc. may be used herein to describe various elements, these elements should not be limited by these terms. These terms are only used to distinguish one element from another. A first element could be termed a second element, and, similarly, a second element could be termed a first element, without departing from the scope of the implementations of the disclosure. As used herein, the term and/or includes any and all combinations of one or more of the associated listed items.

The terminology used herein is for the purpose of describing particular implementations only and is not intended to be limiting of the implementations. As used herein, the singular forms "a," "an," and "the" are intended to include the plural forms as well, unless the context clearly indicates otherwise. It will be further understood that the terms "comprises," "comprising," "includes," and/or "including," when used in this specification, specify the presence of the stated features, steps, operations, elements, and/or components, but do not preclude the presence or addition of one or more other features, steps, operations, elements, components, and/or groups thereof.

It will be understood that when an element is referred to as being "coupled," "connected," or "responsive" to, or "on," another element, it can be directly coupled, connected, or responsive to, or on, the other element, or intervening elements may also be present. In contrast, when an element is referred to as being "directly coupled," "directly connected," or "directly responsive" to, or "directly on," another element, there are no intervening elements present. As used herein the term "and/or" includes any and all combinations of one or more of the associated listed items.

Spatially relative terms, such as "beneath," "below," "lower," "above" "upper," and the like, may be used herein for ease of description to describe one element or feature in relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 130 degrees or at other orientations) and the spatially relative descriptors used herein may be interpreted accordingly.

Unless otherwise defined, the terms (including technical and scientific terms) used herein have the same meaning as commonly understood by one of ordinary skill in the art to which these concepts belong. It will be further understood that terms, such as those defined in commonly used dictionaries, should be interpreted as having a meaning that is consistent with their meaning in the context of the relevant art and/or the present specification and will not be interpreted in an idealized or overly formal sense unless expressly so defined herein.

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized, or location information may be obtained (such as to a city, zip code, or state level), so that a particular location of a user cannot be determined. Thus, the user may have control over what information is collected about the user, how that information is used, and what information is provided to the user.

While certain features of the described implementations have been illustrated as described herein, many modifications, substitutions, changes, and equivalents may occur to those skilled in the art. It is therefore to be understood that the appended claims are intended to cover such modifications and changes as fall within the scope of the implementations. It will be understood that they have been presented by way of example only, not limitation, and various changes in form and details may be made. Any portion of the apparatus and/or methods described herein may be combined in any combination, except mutually exclusive combinations. The implementations described herein can include various combinations and/or sub-combinations of the functions, components, and/or features of the different implementations described. As such, the scope of the present disclosure is not limited to the particular combinations hereafter claimed, but instead extends to encompass any combination of features or example implementations described herein irrespective of whether or not that particular combination has been specifically enumerated in the accompanying claims at this time.

## Claims

1. A scannable digital circuit comprising:
a first stage of combinatorial logic configured to perform, at an output of the first stage, a multiplexing function controlled by a scan enable signal;
a first flip-flop configured to receive the output of the first stage after the multiplexing function is performed, the first flip-flop being a non-scannable flip-flop;
a second stage of combinatorial logic; and
a second flip-flop configured to receive an output of the second stage, the second flip-flop being a scannable flip-flop that is configured to perform the multiplexing function controlled by the scan enable signal.

2. The scannable digital circuit of claim 1, wherein:
the multiplexing function is performed by the first stage using a plurality of logic gates at the output of the first stage, the plurality of logic gates being further configured to perform a buffering function to prepare a first digital signal to be latched by the first flip-flop; and
the second stage includes a logic gate at the output of the second stage, the logic gate configured to perform the buffering function to prepare a second digital signal to be latched by the second flip-flop.

3. The scannable digital circuit of claim 1 or 2,
(a) either implemented within a central processing unit, CPU, and configured, based on the scan enable signal, to operate in either:
a normal mode that contributes to functional operation of the CPU, or
a scan mode that facilitates testing of the CPU;
(b) or implemented within a graphics processing unit, GPU, and configured, based on the scan enable signal, to operate in either:
a normal mode that contributes to functional operation of the GPU, or
a scan mode that facilitates testing of the GPU.

4. A method comprising:
determining that a first propagation delay of a first stage of combinatorial logic is greater than a delay threshold, the first stage preceding a first scannable flip-flop within a scannable digital circuit design;
modifying, based on the determining that the first propagation delay is greater than the delay threshold, the scannable digital circuit design to:
integrate a multiplexing function controlled by a scan enable signal into the first stage at an output of the first stage, and
convert the first scannable flip-flop into a non-scannable flip-flop;
determining that a second propagation delay of a second stage of combinatorial logic is less than the delay threshold, the second stage preceding a second scannable flip-flop within the scannable digital circuit design; and
retaining, based on the determining that the second propagation delay is less than the delay threshold, the second scannable flip-flop in the scannable digital circuit design.

5. The method of claim 4, wherein:
prior to the modifying of the scannable digital circuit design, the first stage includes a logic gate at the output of the first stage, the logic gate being configured to perform a buffering function to prepare a digital signal to be latched by the first scannable flip-flop; and
the multiplexing function is integrated into the first stage by introducing a plurality of logic gates at the output of the first stage to replace the logic gate, the plurality of logic gates being configured to perform both the multiplexing function and the buffering function.

6. The method of claim 4, wherein:
prior to the modifying of the scannable digital circuit design, the first stage includes a logic gate at the output of the first stage, the logic gate being configured to perform a logical function with respect to a first digital signal and a second digital signal; and
the multiplexing function is integrated into the first stage by introducing a plurality of logic gates at the output of the first stage to replace the logic gate, the plurality of logic gates being configured to perform both the multiplexing function and the logical function.

7. The method of claim 6, wherein the logic gate is an AND gate configured to produce an output signal representing:
a logical HIGH value when the first digital signal and the second digital signal both represent the logical HIGH value; and
a logical LOW value otherwise.

8. The method of claim 6, wherein the logic gate is a NAND gate configured to produce an output signal representing:
a logical LOW value when the first digital signal and the second digital signal both represent a logical HIGH value; and
the logical HIGH value otherwise.

9. The method of claim 6, wherein the logic gate is an OR gate configured to produce an output signal representing:
a logical LOW value when the first digital signal and the second digital signal both represent the logical LOW value; and
a logical HIGH value otherwise.

10. The method of claim 6, wherein the logic gate is a NOR gate configured to produce an output signal representing:
a logical HIGH value when the first digital signal and the second digital signal both represent a logical LOW value; and
the logical LOW value otherwise.

11. The method of any one of claims 4 to 10, wherein:
prior to the modifying of the scannable digital circuit design, a maximum frequency at which the scannable digital circuit design is configured to be clocked corresponds to a first period longer than a sum of the delay threshold and a setup time for the first scannable flip-flop; and
subsequent to the modifying of the scannable digital circuit design, the maximum frequency at which the scannable digital circuit design is configured to be clocked corresponds to a second period shorter than or equal to the sum of the delay threshold and the setup time.

12. The method of any one of claims 4 to 11, wherein:
prior to the modifying of the scannable digital circuit design, the scannable digital circuit design produces a first power consumption when clocked at a maximum frequency; and
subsequent to the modifying of the scannable digital circuit design, the scannable digital circuit design produces a second power consumption when clocked at the maximum frequency, the second power consumption being lower than the first power consumption.

13. The method of any one of claims 4 to 12, further comprising constructing a scannable digital circuit based on the scannable digital circuit design, the scannable digital circuit including the first stage of combinatorial logic, the non-scannable flip-flop, the second stage of combinatorial logic, and the second scannable flip-flop.

14. The method of claim 13, wherein the scannable digital circuit is implemented
(a) either within a central processing unit, CPU, and configured, based on the scan enable signal, to operate in either:
a normal mode that contributes to functional operation of the CPU, or
a scan mode that facilitates testing of the CPU;
(b) or within a graphics processing unit, GPU, and configured, based on the scan enable signal, to operate in either:
a normal mode that contributes to functional operation of the GPU, or
a scan mode that facilitates testing of the GPU.

15. A non-transitory computer-readable medium storing instructions that, when executed, cause a processor of a computing device to perform a process comprising:
determining that a first propagation delay of a first stage of combinatorial logic is greater than a delay threshold, the first stage preceding a first scannable flip-flop within a scannable digital circuit design;
modifying, based on the determining that the first propagation delay is greater than the delay threshold, the scannable digital circuit design to:
integrate a multiplexing function controlled by a scan enable signal into the first stage at an output of the first stage, and
convert the first scannable flip-flop into a non-scannable flip-flop;
determining that a second propagation delay of a second stage of combinatorial logic is less than the delay threshold, the second stage preceding a second scannable flip-flop within the scannable digital circuit design; and
retaining, based on the determining that the second propagation delay is less than the delay threshold, the second scannable flip-flop in the scannable digital circuit design.
